# EUROPEAN PATENT SPECIFICATION

(11) **EP 2 353 141 B1**
(45) Date of publication and mention of the grant of the patent: **12.12.2018**
(21) Application number: 09744755.1
(22) Date of filing: 06.10.2009
(51) Int. Cl.: G06T 7/11

(54) **ONE-CLICK CORRECTION OF TUMOR SEGMENTATION RESULTS**
EIN-KLICK-KORREKTUR VON TUMORSEGMENTIERUNGSERGEBNISSEN
CORRECTION PAR UN SIMPLE CLIC DE RÉSULTATS DE SEGMENTATION DE TUMEUR

(30) Priority: 14.10.2008 US 105215 P
(43) Date of publication of application: 10.08.2011
(73) Proprietor: Koninklijke Philips N.V., 5656 AE Eindhoven (NL); Philips Intellectual Property & Standards GmbH, 20099 Hamburg (DE)
(72) Inventor: BUELOW, Thomas, Cleveland Ohio 44143 (US); WIEMKER, Rafael, Cleveland Ohio 44143 (US)
(74) Representative: van Velzen, Maaike Mathilde
(86) International application number: PCT/IB2009/054368
(87) International publication number: WO 2010/044004

(56) References cited:
- US-A1- 2006 110 020
- OLABARRIAGA S D ET AL: "Interaction in the segmentation of medical images: A survey" MEDICAL IMAGE ANALYSIS, OXFORD UNIVERSITY PRESS, OXOFRD, GB, vol. 5, no. 2, 13 June 2001 (2001-06-13), pages 127-142, XP002463194 ISSN: 1361-8415
- WILLIAM E HIGGINS ET AL: "Semi-automatic construction of 3D medical image-segmentation processes" VISUALIZATION IN BIOMEDICAL COMPUTING 1994 : 4 - 7 OCTOBER 1994, ROCHESTER, MINNESOTA; [PROCEEDINGS / SPIE], ROBB RICHARD A (EDITOR), BELLINGHAM, WASH. : SPIE, vol. 2359, 4 October 1994 (1994-10-04), pages 59-71, XP002531055 ISBN: 978-0-8194-1698-8

## Description

The present application finds particular utility in medical image volume segmentation. However, it will be appreciated that the described technique(s) may also find application in other types of imaging systems, image segmentation systems, and/or medical applications.

Segmentation of tumors is a central part in a multitude of clinical applications including tumor visualization, volumetry, input for a computer-assisted diagnosis (CADx) system, and therapy planning. Computer algorithms exist for the automatic or semi-automatic segmentation of tumors in images acquired from different scanner modalities such as computed tomography (CT), magnetic resonance (MR), positron emission tomography (PET), ultrasound, etc. The exact behavior of most of these algorithms can be tuned by a number of parameters. Independent of the performance of the segmentation algorithms, images often remain that cannot be automatically segmented satisfactorily in any case, due to ambiguous segmentation targets. For example, whether the foci of a multi-focal lesion should be segmented separately or the lesion should be segmented as a whole depends on the application and the user interest. The same holds for the width of a "safety margin" around the lesions that might be included in the segmented area.

The ambiguity in the desired segmentation results makes it necessary for the user to be able to correct the initial segmentation results presented by the computer. However, in many cases the parameters of an automatic segmentation algorithm are numerous and their meaning is not intuitive for the clinical user, resulting in the need to rerun the segmentation multiple times using different parameter settings until the desired result is obtained.

Segmentation algorithms are rather complex mathematical formulas, typically including six or more internal parameters such as thresholds, gradients, scalars, exponents limits, and the like. In the expert system that is primarily used at research sites, there is a screen page which enables the user to adjust each of the internal parameters. The mechanical formulas often include functions that interact with, and in some cases counteract, each other. Adjusting individual internal parameters requires an in-depth understanding of the equations and is typically not of interest to a diagnosing physician.

Olabarriaga, S D et al.: "Interaction in the segmentation of medical images: A survey", Medical Image Analysis, Oxford University Press, Oxford, GB, vol. 5, no. 2, 2001, pages 127-142, XP002463194, ISSN: 1361-8415, discloses a survey of interaction methods in the segmentation of medical images. Interaction input types disclosed are: setting parameter values, pictorial input on the image grid, and choosing from a menu. Herein, setting parameters requires an insight of the user in the functioning of the computational part. A conversion from high level of abstraction recognized by the user into the low-level parameters recognized by the computational part is obtained by different types of interpreter functions: Spatial coordinates indicated by a user serve as a rough approximation of the object in the image; the image intensity of pixels indicated by the user determine the image properties; or the mapping function takes into account the sequence of user input.

William E Higgins et al.: "Semi-automatic construction of 3D medical image-segmentation processes", Visualization in Biomedical Computing 1994: 4 - 7 October 1994, Rochester, Minnesota; [Proceedings / Spie], Richard A Robb (Editor), Bellingham, Wash. :Spie, vol. 2359, 1994, pages 59-71, XP002531055, ISBN: 978-0-8194-1698-8, discloses semi-automatic construction of a 3D medical image segmentation process, in which the user defines interactively some problem cues which specify a segmentation task. Clues are used to automatically construct a process for the task. The process consists of automatic image-processing operations. The user works with GUI tools to define a set of cues, and INTERSEG interprets the cues to construct an appropriate sequence of automatic image processing operations for the task.

US 2006/110020 A1 discloses a method for transforming visual preference terminology into a set of fundamental image-quality attributes, and using these attributes to produce a display ready radiographic image that meets a desired appearance.

There is a need in the art for systems and methods that facilitate overcoming the deficiencies noted above by providing improved parameter adjustment mechanisms.

The invention is defined by the appended claims. Roughly speaking, in accordance with one aspect, a medical image segmentation system includes a display on a user interface on which an initial segmented volume of interest is displayed to a user, a user input tool with which the user adjusts a weight of a superparameter of the segmented volume of interest, and a parameter adjuster that adjusts one or more internal parameters associated with the superparameter to effect a change in the segmented volume of interest. The system further includes a processor that iteratively re-segments the volume of interest after one or more internal parameter adjustments by the parameter adjuster and outputs the re-segmented volume to the display.

In accordance with another aspect, a method of adjusting a medical image segmentation includes displaying an initial segmentation of a volume of interest to a user, receiving information related to an adjustment of a weight of a selected superparameter, and identifying internal parameters included in the selected superparameter. The method further includes adjusting the identified internal parameters of the selected superparameter according to a parameter adjustment algorithm, re-segmenting the volume of interest after adjustment of one or more identified internal parameters, and displaying the re-segmented volume of interest.

In accordance with another aspect, an apparatus for concurrently adjusting a plurality of segmentation parameters for segmenting an anatomical image includes means for displaying an initial segmentation of a volume of interest to a user, means for receiving information related to an adjustment of a weight of a selected superparameter, and means for adjusting identified internal parameters of the selected superparameter. The apparatus further includes means for iteratively re-segmenting the volume of interest after adjustment of one or more identified internal parameters, means for calculating an amount of change effected in the volume of interest as a result of the adjustment to the one or more identified internal parameters, and means for outputting a final re-segmented volume of interest upon a determination that the calculated amount of change is greater than or equal to a predetermined threshold amount of change.

One advantage is that user adjustment of internal parameters is simplified.

Another advantage resides providing iterative segmentations of an image until a desired result is achieved by the user.

Still further advantages of the invention will be appreciated by those of ordinary skill in the art upon reading and understand the following detailed description.

The invention may take form in various components and arrangements of components, and in various steps and arrangements of steps. The drawings are only for purposes of illustrating various aspects and are not to be construed as limiting.
FIGURE 1 illustrates a medical image segmentation system that combines individual segmentation parameters associated with a given segmentation feature into one or more "superparameters" that are adjustable by an operator (e.g., a physician, nurse, technician, etc.).
FIGURE 2 illustrates an example of a superparameter, comprising a plurality of internal parameters that are automatically adjusted in response to user adjustment of the superparameter.
FIGURE 3 illustrates images of a segmented mass lesion, before and after adjustment of a connected structures superparameter.
FIGURE 4 shows images of a lesion before and after a hole-filling superparameter is adjusted.
FIGURES 5A and 5B show screenshots of a segmented lung lesion including a pulmonary nodule, shown in a coronal maximum intensity projection. In a first screenshot, a lesion segmentation result is shown with "leakage" (Fig. 5A) and in Fig. 5B, the leakage superparameter has been reduced.

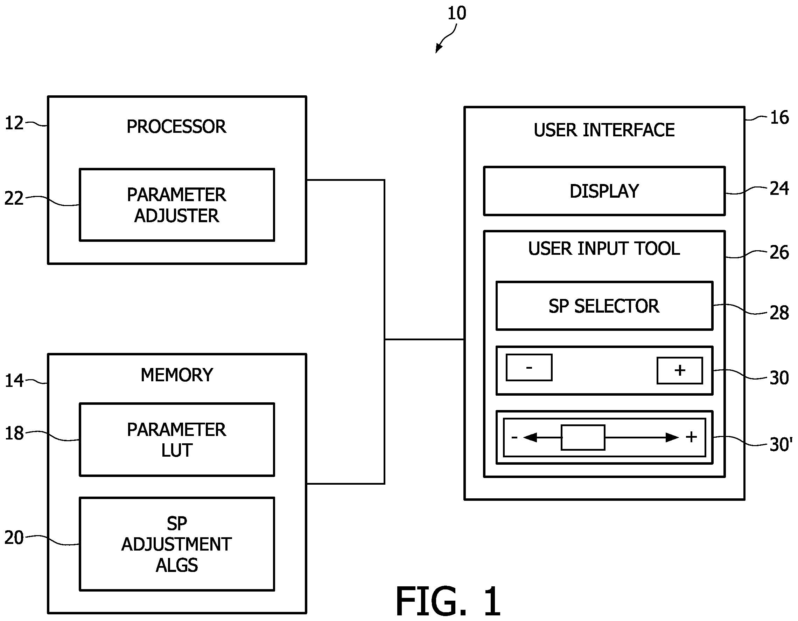

FIGURE 1 illustrates a medical image segmentation system **10** for use in the computerized segmentation of an image volume through image segmentation algorithms that combine individual image segmentation parameters (e.g., thresholds, gradients, scalars, exponents, limits, etc.) that are adjusted to alter an image segmentation into one or more "superparameters" that are adjustable by an operator (e.g., a physician, nurse, technician, etc.) to alter or adjust an image segmentation feature (e.g., roundness, smoothness, volume, hole-filling, connectivity, etc.) associated with the superparameter. That is, adjustment of a superparameter triggers automatic adjustment of image segmentation parameters included in the superparameter (e.g., "internal" parameters) to effect a change in an image segmentation feature associated with the superparameter. For instance, image segmentation features include features of the imaged volume such as smoothness, roundness, volume, etc., and are governed by one or more parameters that may or may not be intuitively meaningful to a user. For example, an adjustment of a superparameter governing image segmentation roundness (e.g., shape convexity) triggers adjustment of one or more image segmentation parameter such as a smoothing parameter (e.g., a parameter internal to the roundness superparameter) that contributes to alteration of the roundness feature of the image segmentation for a volume of interest (e.g., a lesion or tumor, a soft tissue contour, etc.).

Superparameters of the system **10** therefore govern image segmentation features such as volume, surface smoothness, shape convexity (roundness), connectivity, hole-filling, and the like. To increase or decrease one of these superparameters by an incremental amount, a combination of the internal parameters (e.g., individual parameters included in the superparameter) need to be adjusted by differing incremental amounts. The relationship between the superparameters and the underlying internal parameters is linear in some situations and non-linear in others. The system **10** thus makes appropriate incremental adjustments to the internal parameters to make a small incremental adjustment in one of the superparameters, which typically is beyond the ability of the average diagnostician.

The system **10** is for example a part of a medical imaging workstation (e.g., a picture archiving and communication system (PACS) workstation or a CADx workstation, etc) or directly part of a scanner console, etc. The system **10** includes a processor **12** and memory **14**, which are coupled to a user interface **16.** The memory stores various computer-executable algorithms and/or information (e.g., image volume data, segmentation data, parameter information, superparameter information, etc.) related to performing the various functions described herein. For example, the memory includes a parameter lookup table **18** that stores internal parameter information and associated superparameters. For instance, a first internal subset of parameters is associated with a first superparameter, a second subset of parameters is associated with a second superparameter, and so on. Additionally, a given parameter may be associated with more than one superparameter. The memory further includes parameter adjustment algorithms **20**, which are executed by a parameter adjuster **22** in the processor **12** to adjust parameters in a given superparameter in response to user adjustment of the superparameter via user interface **16.**

The user interface **16** includes a display **24** on which image information is presented to a user, and a user input tool **26** by which the user adjusts the superparameter. For example, a user employs a superparameter selector **28** for selecting a superparameter related to a volume of interest or other image segmentation feature in an image on the display **24.** For instance, a superparameter governing a buffer zone (e.g., 2 mm or the like) around a tumor or other anatomical structure can be adjusted (e.g., narrower or wider) depending on conditions associated with a given therapy plan (e.g., ablation, etc.), and the like.

The user adjusts the weight of the selected superparameter using a superparameter adjuster **30.** As one illustrative example, the superparameter adjuster **30** includes buttons, such as (+) and (-) buttons that increase and decrease the weight of the parameter, respectively. The parameter adjuster **22** executes one or more of the parameter adjustment algorithms **20** to modify the weights of individual parameters in the selected superparameter in accordance with the adjustment to the weight of the superparameter.

The processor **12** re-segments the volume of interest according to the new weights of individual parameters as modified by the parameter adjuster **22,** in a manner that is transparent to the user or alternatively in a manner that is visible to the user (e.g., in an expert or advanced mode). By repeatedly pressing a button on the superparameter adjuster **30**, the diagnostician can step through a range of the superparameter weightings. In the background, the parameter adjuster executes a transform (which is one of the superparameter algorithms **20**) that links the incremental steps of each button to corresponding incremental adjustments in the underlying internal parameters associated with the user-selected superparameter. It will be appreciated that the buttons on the superparameter adjuster **30**, and/or the superparameter selector **28**, may be physical buttons on a machine or device in which the system **10** is employed, or may be virtual buttons presented to the user on the display. Moreover, the superparameter adjuster is not limited to buttons comprising (+) and (-) indicators, but rather may include any suitable indicators to inform the user of the button functions (e.g., arrows, words such as "up" and "down," "more" and "less," etc.).

Additionally or alternatively, a superparameter adjuster **30'** is in the form of a slider bar (actual or virtual) that the user manipulates to increase or decrease the weight of a selected superparameter. One having ordinary skill in the art will understand that system **10** can also have any combination of mechanisms for a superparameter adjuster including a slider bar (actual or virtual), pressable or virtual buttons, etc.

By summarizing the possible parameter changes into groups that can be steered by modifying a single superparameter, which has an intuitive meaning to the clinical user, iterative segmentation of the volume of interest can be performed until the user is satisfied with the segmentation. In the background (e.g., transparently to the user), segmentation is rerun iteratively until a certain amount of change in the segmentation result has been reached. That is, the numerical segmentation parameters included in a selected superparameter are varied internally with repeated segmentations that are not shown to the user until a substantial change in, for instance, volume or compactness towards a desired direction has been achieved, and only the substantially changed segmentation result is presented to the user for re-evaluation. As one example, a substantial change is determined or measured as a function of a comparison to a predetermined threshold. The threshold may be set by the user or by the system, and is set to a desired percentage (e.g., 1%, 2%, 5%, 10%, 20%, etc.) of difference relative to a current segmentation image. The user can use the increment/decrement button(s) repeatedly until satisfied with the result, without concern for the actual numerical parameter values.

According to one example, the amount of change threshold for a volume of interest for which a volume superparameter is adjusted is set to 20%. The internal parameters are then adjusted according to a volume parameter adjustment algorithm until the volume has been decreased or increased by 20%.

The segmentation algorithms are capable of post-processing steps to include non-enhanced interior parts of a lesion or tumor, and to exclude enhanced tissue attached to but not part of the lesion (vessels, enhanced parenchyma, etc.). A hole-filling algorithm that "fills in" dark areas associated with necrotic tissue in a lesion in the image of the volume of interest includes interpolating voxel data from neighboring enhanced voxels in the image. That is, necrotic tumor tissue that does not absorb tracer and is thus not enhanced in the image appears as a dark area, while other tumor tissue that absorbs the tracer is enhanced. The hole-filling algorithm fills in the dark areas using voxel values from nearby enhanced areas of the tumor image to create a whole volume, which can be used for tumor volume calculations, surface identification, topography determinations, etc.

In one example of a use of system **10**, an initial (e.g., raw) segmentation of a volume of interest is displayed to the user on the display **24**, and the user selects and adjusts a superparameter via the user interface **16.** Once the threshold amount of change has been met or exceeded, the processor **12** outputs a final segmentation of the volume of interest. The initial and final segmentations are displayed concurrently on the display **24** to permit user comparison. The user then accepts or rejects the final segmentation. If rejected, the final segmentation can be discarded or saved to memory **14**, and the processor **12** retains the initial segmentation for another round of superparameter adjustment. If accepted, the final segmentation is stored to the memory **14** as a new "initial" segmentation for further superparameter adjustment as desired by the user. The original initial segmentation is also retained in the memory **14**, or may be discarded.

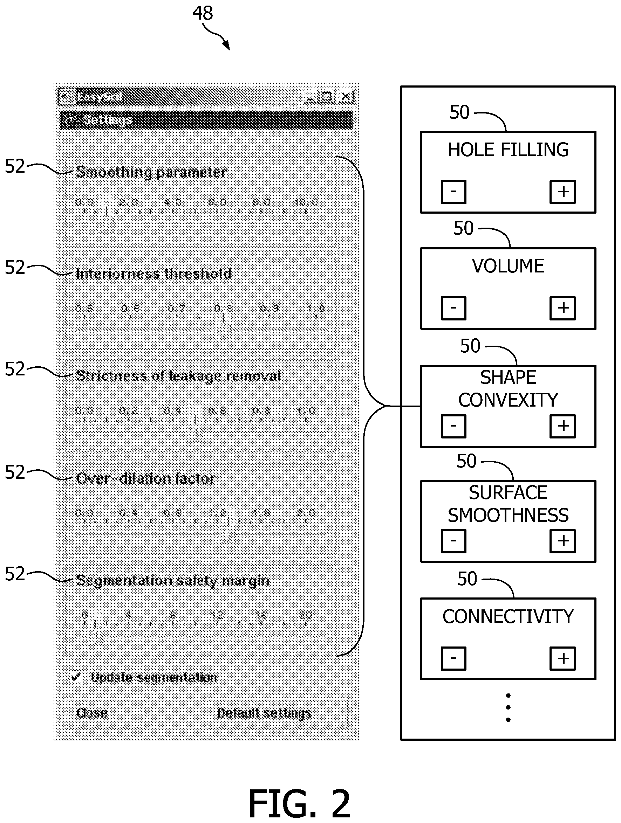

FIGURE 2 illustrates an exemplary display **48** of various superparameters **50**, and a plurality of underlying internal parameters **52.** For instance, the plurality of internal parameters **52** includes a smoothing parameter, an interiorness threshold parameter, a strictness of leakage removal parameter, an over-dilation factor parameter, a segmentation safety margin parameter, etc. Superparameters are based upon such features as volume, surface smoothness, shape convexity (roundness), connectivity, hole-filling, and the like. Upon a user incrementing or decrementing one (or more) of the superparameters **50**, the corresponding internal parameters **52** are adjusted up or down in accordance with the adjustment algorithm **20** until a threshold level of change in the segmentation of the volume of interest is achieved.

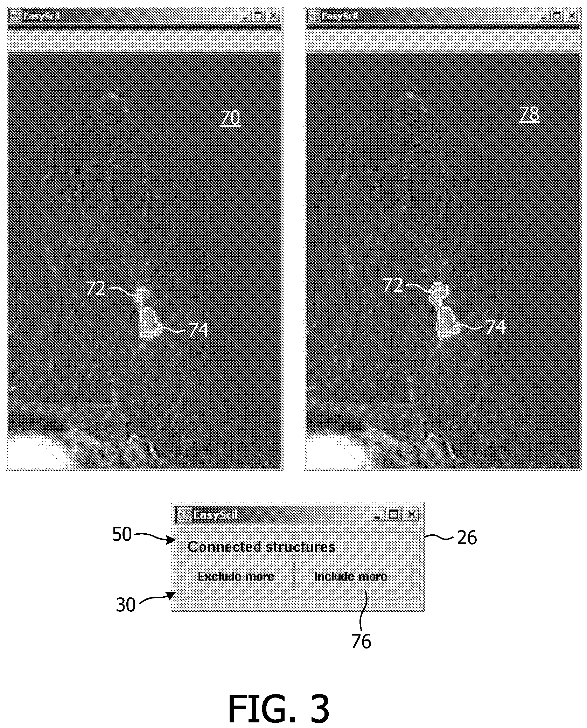

FIGURE 3 illustrates images of a segmented mass lesion. In the first image **70**, two lobes **72**, **74** of the lesion are shown, where the first lobe **72** has been identified as "leakage" and has been excluded from the segmentation result, while the second lobe **74** is included as lesion tissue. Leakage occurs when non-lesion tissue absorbs tracer material, and appears in an image of the lesion. For instance, since tumors induce blood vessels to grow toward them to supply nutrients, tracer or contrast agent sometimes "leaks" into such blood vessels, causing them to appear in an image of the tumor.

After a user has requested inclusion of more connected structures by a single mouse click of an "include more" button **76** on the superparameter adjuster **30** of the input tool **26**, the first lobe **72** is included as part of the tumor (e.g., the first lobe is not identified as leakage, but rather as lesion tissue).

With regard to the inclusion of connected structures, the segmentation algorithms contain a post-processing step that rejects portions of the initial segmentation result on the basis of the width of the connection to the main part of the segmented lesions. For instance, a threshold on the maximum allowed degree of narrowing of a connection between, for instance, the first and second lobes **72**, **74** of the lesion determines whether a connected portion is cut off (e.g., identified as leakage) or not. If the user requests more connected structures to be included in the segmented area, the allowed degree of narrowing is reduced in predefined steps. The post-processing step is repeated for each parameter setting, and the result is compared to the initial segmentation result. In this example, if the segmented area increases by a certain predefined amount (e.g., above the predefined threshold of change), the new result is presented to the user.

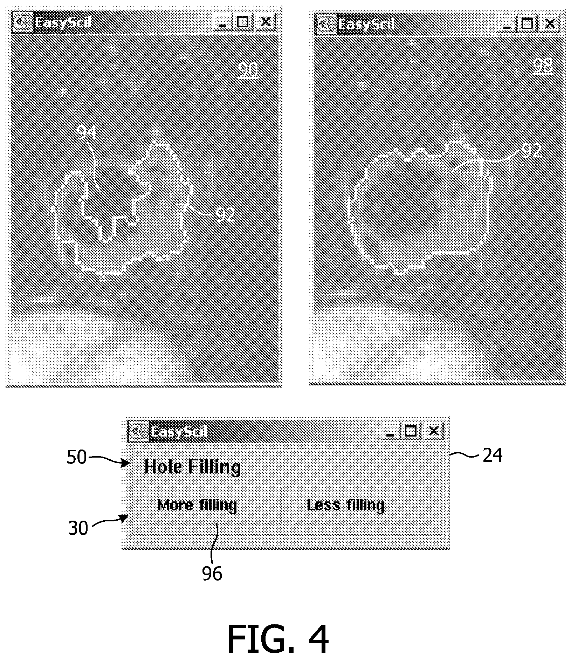

FIGURE 4 shows images of a lesion before and after incrementing a hole-filling algorithm. A first image **90** shows a lesion **92** prior to the hole-filling algorithm, with a necrotic kernel **94** exhibiting poor tracer uptake, which appears as a dark area in the first image. Many tumors contain such necrotic areas, which do not take up contrast agent and thus do not show enhancement of the image intensity. A user can select a hole-filling superparameter **50** to adjust the amount of dark area that is included in the segmentation. For instance, the user can click on or otherwise select a "more filling" button on the superparameter adjuster **30** of the user input tool **26** to include more or all of the dark areas in the lesion volume. The segmenting algorithm can increase or otherwise adjust an "interiorness threshold" parameter to fill in the dark areas, until the lesion **92** is sufficiently filled in to permit a determination of lesion volume, surface characteristics, etc., as shown in the second image **98.**

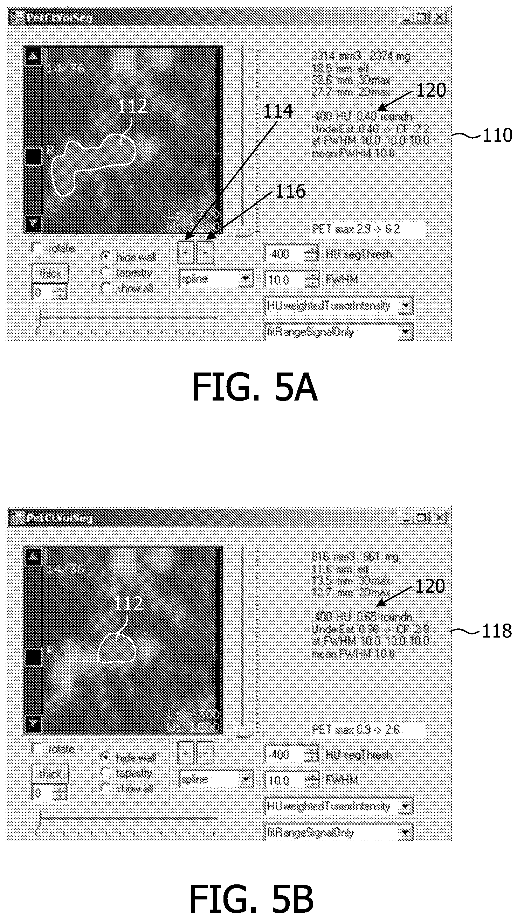

FIGURES 5A and 5B show screenshots of a segmented lung lesion including a pulmonary nodule, shown in a coronal maximum intensity projection. In a first screenshot **110**, a lesion **112** segmentation result is shown with "leakage." A graphical user interface (GUI) has a "plus" button **114** and a "minus" button **116** to request more or less volume or compactness. A second screenshot **118** of Fig. 5B shows the lesion **112** after the user has requested reduced volume by using the minus button **116**, and the leakage has disappeared. To achieve this, the segmentation algorithm has varied a "roundness" superparameter **120** in several steps and has run repeated segmentations until the volume was reduced by a predetermined amount (e.g., 20%, etc.) with respect to the segmentation shown to the user.

The invention has been described with reference to several embodiments. Modifications and alterations may occur to others upon reading and understanding the preceding detailed description. It is intended that the invention be construed as including all such modifications and alterations insofar as they come within the scope of the appended claims.

## Claims

1. A medical image segmentation system (**10**), including:
a display (**24**) on a user interface (**16**) for displaying an initial segmented volume of interest to a user;
user input tool (**26**) for enabling the user to adjust a weight of a superparameter (**50**) of the segmented volume of interest;
a parameter adjuster (**22**) for adjusting a plurality of internal parameters (**52**) in accordance with the adjustment of the weight of the superparameter to effect a change in the segmented volume of interest;
a memory (**14**) that stores a parameter lookup table (**18**) that identifies the plurality of internal parameters associated with each of a plurality of superparameters and one or more parameter adjustment algorithms (**20**), which, when executed by the processor (**12**), cause the parameter adjuster to adjust the associated internal parameters until a predetermined threshold amount of change has been met or exceeded; and
a processor (**12**) for iteratively re-segmenting the volume of interest in accordance with the plurality of internal parameters (**52**) after one or more internal parameter adjustments by the parameter adjuster (**22**) and outputting the re-segmented volume to the display.

2. The system according to claim 1, wherein the user interface (**16**) further includes a superparameter selector (**28**) that a user employs to select a superparameter (**50**) for adjustment.

3. The system according to claim 2, wherein the user interface (**16**) further includes a superparameter adjuster (**30**) that a user employs to adjust the weight of a selected superparameter.

4. The system according to claim 3, wherein the superparameter adjuster (**30**) includes at least one of:
a first button for increasing the weight of the selected superparameter, and a second button for decreasing the weight of the selected superparameter, as the selected superparameter is applied in a segmentation algorithm executed on the volume of interest; or
a slider bar (**30'**) that user manipulates to adjust the weight of a selected superparameter.

5. The system according to claim 1, wherein the superparameter (**50**) is one or more of a volume superparameter, surface smoothness superparameter, roundness superparameter, connectivity superparameter, or hole-filling superparameter.

6. The system according to claim 1, wherein the plurality of internal parameters (**52**) includes at least two of a smoothing parameter, an interiorness threshold parameter, a strictness of leakage removal parameter, an over-dilation factor parameter, a segmentation safety margin parameter.

7. The system according to claim 1, wherein the processor compares each re-segmented volume of interest to the initial segmented volume of interest to determine an amount of change caused by each internal parameter adjustment, and outputs a final re-segmented volume of interest upon a determination that a predetermined threshold amount of change has been met or exceeded by the one or more internal parameter adjustments.

8. The system according to claim 1, wherein the processor (**12**) executes machine-executable instructions stored in the memory (**14**) for segmenting the volume of interest, including instructions for:
generating the initial segmentation of the volume of interest;
receiving information related to an adjustment of the selected superparameter (**50**);
identifying the plurality of internal parameters (**52**) included in the selected superparameter (**50**);
adjusting the one or more of identified internal parameters (**52**) according to a parameter adjustment algorithm (**20**);
re-segmenting the volume of interest after adjustment of one or more identified internal parameters (**52**);
calculating an amount of change effected in the volume of interest as a result of the adjustment to the one or more identified internal parameters (**52**); and
outputting a final re-segmented volume of interest upon a determination that the calculated amount of change is greater than or equal to a predetermined threshold amount of change.

9. Use of the system according to claim 1 for adjusting a volume of interest segmentation, including:
generating the initial segmentation of the volume of interest;
receiving information related to an adjustment of the selected superparameter (**50**);
identifying a plurality of internal parameters (**52**) included in the selected superparameter (**50**);
adjusting the identified internal parameters (**52**) according to said one or more parameter adjustment algorithms (**20**);
re-segmenting the volume of interest after adjustment of the identified internal parameters (**52**); and
displaying the re-segmented volume of interest.

10. The use according to claim 9, further including:
calculating an amount of change effected in the volume of interest as a result of the adjustment to the one or more identified internal parameters (**52**); and
outputting a final re-segmented volume of interest upon a determination that the calculated amount of change is greater than or equal to a predetermined threshold amount of change.

11. A computer-implemented method of adjusting a medical image segmentation, including:
displaying an initial segmentation of a volume of interest to a user;
receiving information related to an adjustment of a weight of a selected superparameter (**50**) of the segmented volume of interest;
identifying a plurality of internal parameters (**52**) included in the selected superparameter (**50**);
adjusting the identified internal parameters (**52**) in accordance with the adjustment of the weight of the selected superparameter (**50**) according to a parameter adjustment algorithm (**20**);
storing a parameter lookup table (**18**) that identifies the plurality of internal parameters associated with each of a plurality of superparameters and one or more parameter adjustment algorithms (**20**), which, when executed by a processor (**12**), cause adjustment of the associated internal parameters until a predetermined threshold amount of change has been met or exceeded;
re-segmenting the volume of interest in accordance with the plurality of internal parameters (**52**) after adjustment of one or more identified internal parameters (**52**); and
displaying the re-segmented volume of interest.

12. The method according to claim 11, wherein:
the superparameter (**50**) is at least one of a volume superparameter, surface smoothness superparameter, roundness superparameter, connectivity superparameter, or hole-filling superparameter; and
the internal parameters include at least two of a smoothing parameter, an interiorness threshold parameter, a strictness of leakage removal parameter, an over-dilation factor parameter, a segmentation safety margin parameter.

13. The method according to claim 11, further including:
iteratively re-segmenting the volume of interest after adjustment of one or more identified internal parameters (**52**);
calculating an amount of change effected in the volume of interest as a result of the adjustment to the one or more identified internal parameters (**52**);
outputting a final re-segmented volume of interest upon a determination that the calculated amount of change is greater than or equal to a predetermined threshold amount of change; displaying the initial segmentation of the volume of interest and the final segmentation of the volume of interest concurrently to the user; and storing the final segmentation of the volume of interest for further superparameter adjustment upon acceptance of the final segmentation by the user; or
reverting to the initial segmentation of the volume of interest for further superparameter adjustment upon rejection of the final segmentation by the user.

14. A processor (**12**) or computer-readable medium (**14**) storing a program configured to execute the method of claim 11.

## Patentansprüche

1. Medizinisches Bildsegmentierungssystem (10), umfassend:
eine Anzeige (24) auf einer Benutzeroberfläche (16) zum Anzeigen eines ursprünglichen segmentierten interessierenden Volumens für einen Benutzer;
Benutzereingabewerkzeug (26), um dem Benutzer zu ermöglichen, ein Gewicht eines Superparameters (50) des segmentierten interessierenden Volumens einzustellen;
einen Parametereinsteller (22) zum Einstellen einer Vielzahl von internen Parametern (52) in Übereinstimmung mit der Einstellung des Gewichts des Superparameters, um eine Änderung in dem segmentierten interessierenden Volumen hervorzurufen;
einen Speicher (14), welcher eine Parameterreferenztabelle (18) speichert, welche die Vielzahl von internen Parametern, welche mit jedem aus der Vielzahl von Superparametern verbunden sind,
und einen oder mehrere Parametereinstellungsalgorithmen (20), welche, wenn von dem Prozessor (12) ausgeführt, den Parametereinsteller veranlassen, die verbundenen internen Parameter einzustellen, bis eine vorbestimmte Schwellenänderungsgröße erreicht oder übertroffen wird, identifiziert; und
einen Prozessor (12) zum iterativen Resegmentieren des interessierenden Volumens in Übereinstimmung mit der Vielzahl von internen Parameters (52), nach einer oder mehreren internen Parametereinstellungen durch den Parametereinsteller (22) und Ausgeben des resegmentierten Volumens an die Anzeige.

2. System nach Anspruch 1, wobei die Benutzeroberfläche (16) weiter einen Superparameterselektor (28) beinhaltet, welcher von einem Benutzer verwendet wird, um einen Superparameter (50) für die Einstellung auszuwählen.

3. System nach Anspruch 2, wobei die Benutzeroberfläche (16) weiter einen Superparametereinsteller (30) beinhaltet, welcher von einem Benutzer verwendet wird, um das Gewicht eines ausgewählten Superparameters einzustellen.

4. System nach Anspruch 3. wobei der Superparametereinsteller (30) zumindest eines der folgenden beinhaltet:
eine erste Taste zum Erhöhen des Gewichts des ausgewählten Superparameters, und eine zweite Taste zum Verringern des Gewichts des ausgewählten Superparameters; während der ausgewählte Superparameter in einem Segmentierungsalgorithmus angewendet wird, welcher für das interessierende Volumen ausgeführt wird; oder
einen Schieberegler (30'), welcher Benutzer manipuliert, um das Gewicht eines ausgewählten Superparameters einzustellen.

5. System nach Anspruch 1, wobei der Superparameter (50) ein oder mehrere von einem Gewichts-Superparameter, Oberflächenweichheit-Superparameter, Rundheits-Superparameter, Verbindungs-Superparameter oder Lochfüllungs-Superparameter ist.

6. System nach Anspruch 1, wobei die Vielzahl von internen Parametern (52) zumindest zwei von einem Glättungsparameter, einem Innenheitsschwellenparameter, einem Parameter für die Genauigkeit der Undichtigkeitsentfernung, einem Segmentierungssicherheitsabstandsparameter beinhaltet.

7. System nach Anspruch 1, wobei der Prozessor jedes resegmentierte interessierende Volumen mit dem ursprünglichen segmentierten interessierenden Volumen vergleicht, um eine Änderungsgröße zu bestimmen, welche von jeder internen Parametereinstellung verursacht wurde, und ein endgültiges resegmentiertes interessierendes Volumen ausgibt, wenn bestimmt wird, das eine vorbestimmte Änderungsschwellengröße von der einen oder den mehreren internen Parametereinstellungen erreicht oder übertroffen wurde.

8. System nach Anspruch 1, wobei der Prozessor (12) maschinenausführbare Anweisungen ausführt, welche in dem Speicher (14) gespeichert sind, um das interessierende Volumen zu segmentieren, einschließlich Anweisungen für:
Erzeugen der ursprünglichen Segmentierung des interessierenden Volumens;
Empfangen von Informationen mit Bezug zu einer Einstellung des ausgewählten Superparameters (50);
Identifizierung der Vielzahl von internen Parametern (52), welche in dem ausgewählten Superparameter (50) beinhaltet sind;
Einstellen des einen oder der mehreren identifizierten internen Parameter (52) nach einem Parametereinstellungsalgorithmus (20);
Resegmentieren des interessierenden Volumens nach der Einstellung von einem oder mehreren identifizierten internen Parametern (52);
Berechnen einer Änderungsgröße, welche in dem interessierenden Volumen als ein Ergebnis der Einstellung für den einen oder die mehreren identifizierten internen Parameter (52) erreicht wird; und
Ausgeben eines endgültigen resegmentierten interessierenden Volumens nach einer Bestimmung, dass die berechnete Änderungsgröße größer oder gleich einer vorbestimmten Schwellenänderungsgröße ist.

9. Nutzung des Systems nach Anspruch 1 zum Einstellen einer interessierenden Volumen-Segmentierung; beinhaltend:
Erzeugen der ursprünglichen Segmentierung des interessierenden Volumens;
Empfangen von Informationen mit Bezug zu einer Einstellung des ausgewählten Superparameters (50);
Identifizieren einer Vielzahl von internen Parametern (52), welche in dem ausgewählten Superparameter (50) beinhaltet sind;
Einstellen des identifizierten internen Parameters (52) nach dem einen oder den mehreren Parametereinstellungsalgorithmen (20);
Resegmentieren des interessierenden Volumens nach Einstellung der identifizierten internen Parameter (52); und
Anzeigen des resegmentierten interessierenden Volumens.

10. Nutzung nach Anspruch 9, weiter beinhaltend:
Berechnen einer Änderungsgröße, welche in dem interessierenden Volumen als ein Ergebnis der Einstellung für den einen oder die mehreren identifizierten internen Parameter (52) erreicht wird; und
Ausgeben eines endgültigen resegmentierten interessierenden Volumens nach einer Bestimmung, dass die berechnete Änderungsgröße größer oder gleich einer vorbestimmten Schwellenänderungsgröße ist.

11. Computerimplementiertes Verfahren zum Einstellen einer medizinischen Bildsegmentierung, beinhaltend:
Anzeigen einer ursprünglichen Segmentierung eines einen Benutzer interessierenden Volumens;
Empfangen von Informationen mit Bezug zu einer Einstellung eines Gewichts eines ausgewählten Superparameters (50) des segmentierten interessierenden Volumens;
Identifizieren einer Vielzahl von internen Parametern (52), welche in dem ausgewählten Superparameter (50) beinhaltet sind;
Einstellen des identifizierten internen Parameters (52) in Übereinstimmung mit der Einstellung des Gewichts des ausgewählten Superparameters (50) nach einem Parametereinstellungsalgorithmus (20);
Speichern einer Parameterreferenztabelle (18), welche die Vielzahl von internen Parametern, welche mit jedem aus der Vielzahl von Superparametern verbunden sind, und einen oder mehrere Parametereinstellungsalgorithmen (20), welche, wenn von einem Prozessor (12) ausgeführt, Einstellung der verbundenen internen Parameter veranlassen, bis eine vorbestimmte Schwellenänderungsgröße erreicht oder übertroffen wurde, identifiziert;
Resegmentieren des interessierenden Volumens in Übereinstimmung mit der Vielzahl von internen Parametern (52) nach der Einstellung von einem oder mehreren identifizierten internen Parametern (52); und
Anzeigen des resegmentierten interessierenden Volumens.

12. Verfahren nach Anspruch 11, wobei:
der Superparameter (50) zumindest einer von einem Gewichts-Superparameter, Oberflächenweichheit-Superparameter, Rundheits-Superparameter, Verbindungs-Superparameter oder Lochfüllungs-Superparameter ist; und
die internen Parameter zumindest zwei von einem Glättungsparameter, einem Innenheitsschwellenparameter, einem Parameter für die Genauigkeit der Undichtigkeitsentfernung, einem Segmentierungssicherheitsabstandsparameter beinhalten.

13. Verfahren nach Anspruch 11, weiter beinhaltend:
iteratives Resegmentieren des interessierenden Volumens nach der Einstellung von einem oder mehreren identifizierten internen Parametern (52); Berechnen einer Änderungsgröße, welche in dem interessierenden Volumen als ein Ergebnis der Einstellung für den einen oder die mehreren identifizierten internen Parameter (52) erreicht wird;
Ausgeben eines endgültigen resegmentierten interessierenden Volumens nach einer Bestimmung, dass die berechnete Änderungsgröße größer oder gleich einer vorbestimmten Schwellenänderungsgröße ist; gleichzeitiges Anzeigen der ursprünglichen Segmentierung des interessierenden Volumens und der endgültigen Segmentierung des interessierenden Volumens für den Benutzer; und Speichern der endgültigen Segmentierung des interessierenden Volumens für weitere Einstellung von Superparametern nach Akzeptieren der endgültigen Segmentierung durch den Benutzer; oder
Zurücksetzen auf die ursprüngliche Segmentierung des interessierenden Volumens für weitere Einstellung von Superparametern nach Ablehnen der endgültigen Segmentierung durch den Benutzer.

14. Prozessor (12) oder computerlesbares Medium (14) zum Speichern eines Programms, welches konfiguriert ist, das Verfahren nach Anspruch 11 auszuführen.

## Revendications

1. Système de segmentation d'image médicale (10) comprenant :
un dispositif d'affichage (24) sur une interface utilisateur (16) pour afficher un volume d'intérêt initial segmenté à un utilisateur ;
un outil d'entrée utilisateur (26) pour permettre à l'utilisateur d'ajuster un poids d'un superparamètre (50) du volume d'intérêt segmenté ;
un ajusteur de paramètres (22) pour ajuster une pluralité de paramètres internes (52) conformément à l'ajustement du poids du superparamètre pour effectuer un changement dans le volume d'intérêt segmenté ;
une mémoire (14) qui stocke une table de consultation de paramètres (18) qui identifie la pluralité de paramètres internes associés à chacun d'une pluralité de superparamètres et un ou plusieurs algorithmes d'ajustement de paramètres (20) qui, lorsqu'ils sont exécutés par le processeur (12), amènent l'ajusteur de paramètres à ajuster les paramètres internes associés jusqu'à ce qu'une quantité de changement de seuil prédéterminée ait été atteinte ou dépassée ; et
un processeur (12) pour resegmenter par voie itérative le volume d'intérêt conformément à la pluralité de paramètres internes (52) après un ou plusieurs ajustements de paramètres internes par l'ajusteur de paramètres (22) et la délivrance du volume resegmenté au dispositif d'affichage.

2. Système selon la revendication 1, dans lequel l'interface utilisateur (16) comprend en outre un sélecteur de superparamètres (28) qu'un utilisateur utilise pour sélectionner un superparamètre (50) pour l'ajustement.

3. Système selon la revendication 2, dans lequel l'interface utilisateur (16) comprend en outre un ajusteur de superparamètres (30) qu'un utilisateur emploie pour ajuster le poids d'un superparamètre sélectionné.

4. Système selon la revendication 3, dans lequel l'ajusteur de superparamètres (30) comprend au moins l'un des éléments suivants :
un premier bouton pour augmenter le poids du superparamètre sélectionné et un second bouton pour réduire le poids du superparamètre sélectionné lorsque le superparamètre sélectionné est appliqué dans un algorithme de segmentation exécuté sur le volume d'intérêt ; ou
un curseur (30') que l'utilisateur manipule pour ajuster le poids d'un superparamètre sélectionné.

5. Procédé selon la revendication 1, dans lequel le superparamètre (50) est formé d'un ou plusieurs d'un superparamètre de volume, d'un superparamètre de lissage de surface, d'un superparamètre d'arrondi, d'un superparamètre de connectivité ou d'un superparamètre de remplissage de trous.

6. Système selon la revendication 1, dans lequel la pluralité de paramètres internes (52) comprend au moins deux d'un paramètre de lissage, d'un paramètre de seuil d'intériorité, d'un paramètre de rigueur de retrait de fuites, d'un paramètre de facteur de surdilatation, d'un paramètre de marge de sécurité de segmentation.

7. Système selon la revendication 1, dans lequel le processeur compare chaque volume d'intérêt resegmenté au volume d'intérêt segmenté initial pour déterminer une quantité de changement provoquée par chaque ajustement de paramètre interne et délivre un volume d'intérêt resegmenté final lors d'une détermination qu'une quantité de changement de seuil prédéterminée a été atteinte ou dépassée par les un ou plusieurs ajustements de paramètres internes.

8. Système selon la revendication 1, dans lequel le processeur (12) exécute des instructions exécutables sur machine stockées dans la mémoire (14) pour segmenter le volume d'intérêt, comprenant des instructions pour :
générer la segmentation initiale du volume d'intérêt ;
recevoir des informations en rapport avec un ajustement du superparamètre sélectionné (50) ;
identifier la pluralité de paramètres internes (52) inclus dans le superparamètre sélectionné (50) ;
ajuster les un ou plusieurs paramètres internes identifiés (52) selon un algorithme d'ajustement de paramètres (20) ;
resegmenter le volume d'intérêt après ajustement d'un ou plusieurs paramètres internes identifiés (52) ;
calculer une quantité de changement effectuée dans le volume d'intérêt à la suite de l'ajustement aux un ou plusieurs paramètres internes identifiés (52) ; et
délivrer un volume d'intérêt resegmenté final lors d'une détermination que la quantité de changement calculée est supérieure ou égale à une quantité de changement de seuil prédéterminée.

9. Utilisation du système selon la revendication 1 pour ajuster une segmentation de volume d'intérêt, comprenant :
la génération de la segmentation initiale du volume d'intérêt ;
la réception d'informations en rapport avec un ajustement du superparamètre sélectionné (50) ;
l'identification d'une pluralité de paramètres internes (52) inclus dans le superparamètre sélectionné (50) ;
l'ajustement des paramètres internes identifiés (52) selon lesdits un ou plusieurs algorithmes d'ajustement de paramètres (20) ;
la resegmentation du volume d'intérêt après ajustement des paramètres internes identifiés (52) ; et
l'affichage du volume d'intérêt resegmenté.

10. Utilisation selon la revendication 9, comprenant en outre :
le calcul d'une quantité de changement effectuée dans le volume d'intérêt à la suite de l'ajustement des un ou plusieurs paramètres internes identifiés (52) ; et
la délivrance d'un volume d'intérêt resegmenté final lors d'une détermination que la quantité de changement calculée est supérieure ou égale à une quantité de changement de seuil prédéterminée.

11. Procédé mis en oeuvre par ordinateur d'ajustement d'une segmentation d'image médicale, comprenant :
l'affichage d'une segmentation initiale d'un volume d'intérêt à un utilisateur ;
la réception d'informations en rapport avec un ajustement d'un poids d'un superparamètre sélectionné (50) du volume d'intérêt segmenté ;
l'identification d'une pluralité de paramètres internes (52) inclus dans le superparamètre sélectionné (50) ;
l'ajustement des paramètres internes identifiés (52) conformément à l'ajustement du poids du superparamètre sélectionné (50) selon un algorithme d'ajustement de paramètres (20) ;
le stockage d'une table de consultation de paramètres (18) qui identifie la pluralité de paramètres internes associés à chacun d'une pluralité de superparamètres et d'un ou plusieurs algorithmes d'ajustement de paramètres (20) qui, lorsqu'ils sont exécutés par un processeur (12), provoquent l'ajustement des paramètres internes associés jusqu'à ce qu'une quantité de changement de seuil prédéterminée ait été atteinte ou dépassée ;
la resegmentation du volume d'intérêt selon une pluralité de paramètres internes (52) après ajustement d'un ou plusieurs paramètres internes identifiés (52) ; et
l'affichage du volume d'intérêt resegmenté.

12. Procédé selon la revendication 11, dans lequel :
le superparamètre (50) est au moins l'un d'un superparamètre de volume, d'un superparamètre de lissage de surface, d'un superparamètre d'arrondi, d'un superparamètre de connectivité ou d'un superparamètre de remplissage de trous ; et
les paramètres internes comprennent au moins deux d'un paramètre de lissage, d'un paramètre de seuil d'intériorité, d'un paramètre de rigueur de retrait de fuites, d'un paramètre de facteur de surdilatation, d'un paramètre de marge de sécurité de segmentation.

13. Procédé selon la revendication 11, comprenant en outre :
la resegmentation itérative du volume d'intérêt après ajustement d'un ou plusieurs paramètres internes identifiés (52) ;
le calcul d'une quantité de changement effectuée dans le volume d'intérêt à la suite de l'ajustement des un ou plusieurs paramètres internes identifiés (52) ;
la délivrance d'un volume d'intérêt resegmenté final lors d'une détermination que la quantité de changement calculée est supérieure ou égale à une quantité de changement de seuil prédéterminée ; l'affichage de la segmentation initiale du volume d'intérêt et la segmentation finale du volume d'intérêt simultanément à l'utilisateur ; et le stockage de la segmentation finale du volume d'intérêt pour un autre ajustement de superparamètre lors de l'acceptation de la segmentation finale par l'utilisateur ; ou
le retour à la segmentation initiale du volume d'intérêt pour un autre ajustement de superparamètre lors du rejet de la segmentation finale par l'utilisateur.

14. Processeur (12) ou support lisible par ordinateur (14) stockant un programme configuré pour exécuter le procédé de la revendication 11.
